# FASCICULE DE BREVET EUROPEEN

(11) **EP 4 034 755 B1**
(45) Date de publication et mention de la délivrance du brevet: **28.06.2023**
(21) Numéro de dépôt: 20790364.2
(22) Date de dépôt: 23.09.2020
(51) Int. Cl.: F01D 11/24, F01D 25/14

(54) **DISPOSITIF DE REFROIDISSEMENT PAR JETS D'AIR D'UN CARTER DE TURBINE**
VORRICHTUNG ZUR KÜHLUNG EINES TURBINENGEHÄUSES MIT LUFTSTRAHLEN
DEVICE FOR COOLING A TURBINE CASING WITH AIR JETS

(30) Priorité: 23.09.2019 FR 1910476
(43) Date de publication de la demande: 03.08.2022
(73) Titulaire: SAFRAN AIRCRAFT ENGINES, 75015 Paris (FR)
(72) Inventeur: CONTINI, Nicolas, 77550 MOISSY-CRAMAYEL (FR); DESCAMPS, Laurent Claude, 77550 MOISSY-CRAMAYEL (FR); HAYNAU, Rémy Miled Michel, 77550 MOISSY-CRAMAYEL (FR); GOOSSENS, Maria, 77550 MOISSY-CRAMAYEL (FR); SILET, Benoit Guillaume, 77550 MOISSY-CRAMAYEL (FR)
(74) Mandataire: Regimbeau
(86) Numéro de dépôt international: PCT/FR2020/051654
(87) Numéro de publication internationale: WO 2021/058908

(56) Documents cités:
- EP-A1- 3 318 725
- EP-A2- 0 156 269
- WO-A1-2016/068855
- FR-A1- 3 050 228

## Description

### DOMAINE DE L'INVENTION

La présente invention concerne le domaine du refroidissement d'un carter d'une turbomachine. Plus précisément, l'invention concerne un dispositif de refroidissement par jets d'air d'un carter de turbine d'une turbomachine à double flux, notamment d'un carter de turbine basse pression.

L'invention concerne également une turbine d'une turbomachine, notamment une turbine basse pression, comprenant un tel dispositif de refroidissement, ainsi qu'une turbomachine comprenant une telle turbine.

### ETAT DE LA TECHNIQUE

De manière connue en soi, une turbomachine 1 à double flux comprend généralement, d'amont en aval dans le sens de l'écoulement des gaz dans la turbomachine, une soufflante 2 qui peut éventuellement être carénée et logée dans un carter de soufflante, une veine annulaire d'écoulement primaire et une veine annulaire d'écoulement secondaire. La masse d'air aspirée par la soufflante 2 est donc divisée en un flux primaire, qui circule dans la veine d'écoulement primaire, et en un flux secondaire, qui est concentrique avec le flux primaire et circule dans la veine d'écoulement secondaire.

La veine d'écoulement primaire traverse un corps primaire comprenant un ou plusieurs étages de compresseurs 3, 4, par exemple un compresseur basse pression 3 et un compresseur haute pression 4, une chambre de combustion 5, un ou plusieurs étages de turbines 6, 7 par exemple une turbine haute pression 6 et une turbine basse pression 7, et une tuyère d'échappement des gaz.

Typiquement, la turbine haute pression 6 entraine en rotation le compresseur haute pression 4 par l'intermédiaire d'un premier arbre, dit arbre haute pression, tandis que la turbine basse pression 7 entraine en rotation le compresseur basse pression et la soufflante 2 par l'intermédiaire d'un deuxième arbre, dit arbre basse pression.

Les turbines 6, 7 sont réalisées sous la forme d'une succession d'étages comprenant chacun une roue d'aubes mobiles (rotor) tournant devant une roue d'aubes fixes (stator, ou distributeurs).

La turbine basse pression 7 d'une turbomachine 1 est entourée par un carter C de forme générale évasée, sensiblement tronconique. Afin de garantir un rendement élevé dans la turbomachine 1, il convient de limiter le flux d'air ne traversant pas les roues mobiles des différents étages, c'est-à-dire de limiter les fuites entre les extrémités radialement externes des aubes et l'anneau en matériau abradable en regard. Pour cela, il convient de contrôler le jeu au niveau de cette interface, ce jeu étant dépendant de la température du carter C et notamment des zones dudit carter C comportant les crochets ou brides supportant l'anneau en matériau abradable.

Habituellement, ce carter C est refroidi en utilisant la technologie du refroidissement par jets d'air (également connu sous la désignation de refroidissement par impact). Pour cela, le carter C est équipé d'un ou plusieurs boitier(s) B d'alimentation en air sous pression, chacun raccordé à plusieurs rampes de refroidissement R.

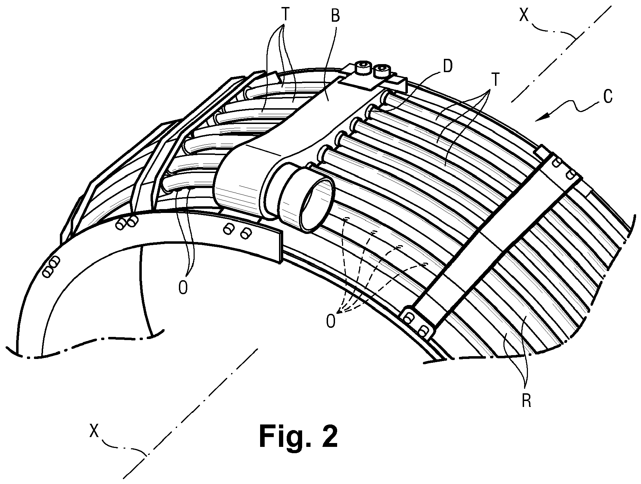

Dans l'exemple de réalisation représenté sur les figures, le carter C est équipé de deux boitiers B, positionnés à environ 180° l'un de l'autre (un seul étant visible sur la figure 2). En outre, chaque boitier B est équipé de cinq rampes R, avec deux tubes T par rampes, chaque tube s'étendant sur environ 90°. Les tubes T ainsi que le boitier B sont percés d'une série d'orifices 0 débouchant au droit de la surface extérieure du carter. L'air sous pression transitant au travers de ces orifices 0 assure ainsi une ventilation par jets d'air du carter C.

Habituellement, chaque tube T est raccordé au boitier par l'intermédiaire d'une douille cylindrique, chaque tube T étant brasé dans la douille.

Toutefois, afin de refroidir suffisamment le carter C, en particulier pendant les phases de vol les plus contraignantes telles que le décollage, il est nécessaire de prélever une quantité d'air froid suffisante en amont de la turbine (généralement, au niveau des étages de compresseur) pour assurer une pression d'impact suffisante. Or un tel prélèvement a nécessairement un impact négatif sur les performances de la turbomachine 1.

Le document EP3318725 décrit un ensemble de raccordement comprenant un boitier de distribution d'air depuis un passage d'entrée d'air vers au moins un conduit raccordé avec le boitier par au moins une douille montée sur un orifice d'une paroi du boîtier. Cette paroi du boitier et une paroi interne de la douille se raccordent par un congé de raccordement présentant un rayon qui est maximum sur un secteur angulaire.

Le document FR3050228 décrit un dispositif de refroidissement par jets d'air du carter d'une turbine comprenant un boitier d'alimentation en air sous pression et au moins deux tubes de refroidissement incurvés, disposés de part et d'autre dudit boitier, autour et à distance d'une partie du carter et étant muni d'orifices d'injection d'air, ledit boitier comprenant notamment un fond et deux parois latérales longitudinales, et ce fond étant percé d'orifices d'injection d'air.

### EXPOSE DE L'INVENTION

Un but de l'invention est de résoudre les inconvénients de l'art antérieur. L'invention a donc notamment pour objectif de proposer un dispositif de refroidissement par jets d'air du carter d'une turbomachine, notamment d'un carter de turbine, qui améliore le refroidissement du carter tout en réduisant l'impact sur les performances de la turbomachine.

Il est à cet effet proposé, selon un premier aspect de l'invention, un dispositif de refroidissement par jets d'air pour un carter d'une turbomachine, notamment un carter de turbine, comprenant :
- un boitier d'alimentation en air de refroidissement présentant une paroi,
- au moins un tube présentant une première extrémité montée sur la paroi du boitier de sorte à mettre le tube en communication fluidique avec le boîtier, une pluralité d'orifices étant formés dans une paroi du tube afin d'éjecter l'air de refroidissement provenant du boitier sur le carter.

Le dispositif de refroidissement comprend en outre une variation progressive de section dans le tube au niveau de la première extrémité définissant un bossage, ledit *bossage* présentant une surface courbe configurée pour être baignée dans l'air de refroidissement de sorte à éviter un décollement d'une couche limite de l'air de refroidissement au niveau d'une interface entre la première extrémité du tube et le boîtier.

Certaines caractéristiques préférées mais non limitatives du dispositif de refroidissement selon le premier aspect sont les suivantes, prises individuellement ou en combinaison :
- la surface courbe du bossage est dépourvue d'arête.
- la variation progressive de section définit, à partir de l'interface entre la première extrémité du tube et la paroi du boitier et dans un sens d'écoulement de l'air de refroidissement dans le tube, une section progressivement convergente puis progressivement divergente.
- le bossage présente une épaisseur variable.
   le bossage est rapporté et fixé à la première extrémité du tube ou monolithique avec le tube et le boîtier.
- le bossage présente une portion de rétrécissement de section de boitier qui s'étend dans le boitier d'alimentation.
- la portion de rétrécissement de section de boitier présente une section qui diminue progressivement en s'éloignant du tube. Et/ou
- la première extrémité du tube comprend une paroi tronconique de liaison à la paroi du boîtier, la paroi tronconique ayant une section qui converge progressivement depuis ladite paroi du boitier vers le tube, le bossage comprenant en outre une portion de paroi tronconique qui présente une épaisseur variable et qui s'étend le long de la paroi tronconique.

Selon un deuxième aspect, l'invention propose une turbine d'une turbomachine, notamment une turbine basse pression, comprenant un dispositif de refroidissement par jets d'air comme décrit ci-dessus.

Selon un troisième aspect, l'invention propose également une turbomachine comprenant une turbine, notamment une turbine basse pression, comme décrite ci-dessus.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

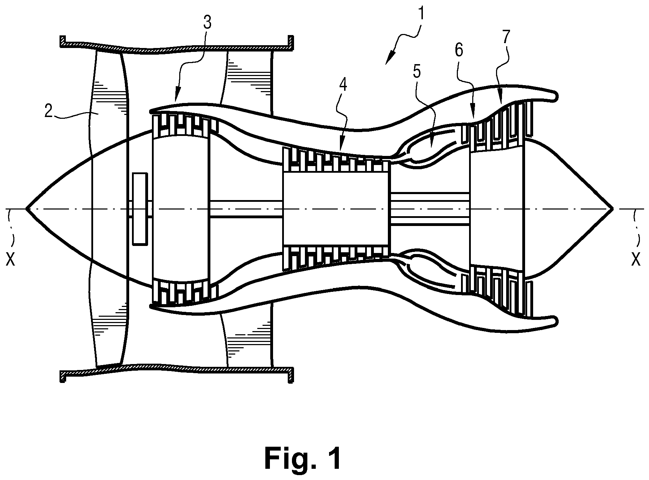

La figure 1 illustre de façon schématique une turbomachine 1 conforme à un mode de réalisation de l'invention.
La figure 2 est une vue en perspective d'une partie d'un dispositif de refroidissement d'un carter de turbine basse pression conforme à un mode de réalisation de l'invention.
Les figures 3, 4 et 5 sont des vues schématiques et en coupe partielle d'une partie d'un boitier d'alimentation et d'une entrée d'air d'une rampe de refroidissement conformes à trois modes de réalisation de l'invention sur lesquelles ont été représentées des lignes de courant d'air sous pression dans la configuration de l'art antérieur (en pointillés) et dans la configuration de l'invention (en traits pleins).

Sur l'ensemble des figures, les éléments similaires portent des références identiques.

### DESCRIPTION DETAILLEE DE L'INVENTION

Un dispositif de refroidissement est configuré pour refroidir le carter C d'une turbine, notamment d'une turbine basse pression. Un carter C de turbine a une forme évasée comprenant généralement plusieurs portions tronconiques successives. Il présente une extrémité amont et une extrémité aval. Le dispositif de refroidissement est configuré pour être fixé sur une surface externe du carter C et comprend un boitier d'alimentation B en air sous pression et au moins une rampe de refroidissement R. De préférence, le dispositif de refroidissement comprend plusieurs rampes, par exemple au nombre de huit sur la figure 2, réparties autour du carter C.

Comme décrit précédemment, le carter C peut être équipé de deux dispositifs de refroidissement, avec par exemple deux boîtiers d'alimentation B positionnés à environ 180° l'un de l'autre et dont les tubes T des rampes de refroidissement R s'étendent de chaque côté de ce boitier B, sur environ 90°. Le carter C peut également être équipé de quatre boîtiers d'alimentation B, les tubes T des rampes de refroidissement R s'étendant alors sur une étendue circonférentielle moindre autour du carter C.

Le boîtier d'alimentation B forme un canal s'étendant axialement par rapport à l'axe X de révolution du carter C. Les tubes T des rampes s'étendent donc circonférentiellement de part et d'autre du boitier B.

Chaque tube T d'une rampe de refroidissement R forme une canalisation sensiblement courbe (secteur d'anneau) qui comprend une première extrémité formant une entrée d'air qui débouche dans le canal du boitier B et une deuxième extrémité (non visible sur les figures) opposée qui est fermée. Habituellement, la section des tubes T est globalement circulaire. Comme nous le verrons toutefois par la suite, la section des tubes T peut varier localement, notamment au niveau de leur première extrémité.

Chaque tube T est par ailleurs percé d'une pluralité d'orifices O d'éjection d'air. Le boitier B est relié à une source d'alimentation en air sous pression, non représentée sur les figures. Ce boitier B est disposé radialement à l'extérieur de la surface extérieure du carter C et à distance de celle-ci. De la sorte, l'air de refroidissement sous pression est envoyé par la source d'alimentation dans le canal du boitier B, puis pénètre dans les rampes par la première extrémité des tubes T avant d'être éjecté via les orifices O sur le carter C de manière à le refroidir.

Dans un exemple de réalisation, le boitier B peut par exemple être fixé au carter C à l'aide d'une bride amont, elle-même solidaire de l'extrémité amont du carter C et à l'aide d'une bride aval, elle-même solidaire de l'extrémité aval du carter C. D'autres modes de fixation du boitier sont envisageables.

Dans ce qui suit, on désignera par axe de révolution du tube T, l'axe A de symétrie du tube T au niveau de sa fixation au boitier d'alimentation B. Cet axe A est donc sensiblement perpendiculaire à la paroi latérale du boitier B et passe par le centre de la première extrémité. La direction axiale correspond à la direction de l'axe A, et une direction radiale est une direction perpendiculaire à cet axe et passant par lui. De même, un plan axial est un plan contenant l'axe A du tube T et un plan radial est un plan perpendiculaire à cet axe A et passant par lui. Sauf précision contraire, on utilisera interne et externe, respectivement, sont utilisés en référence à une direction radiale de sorte que la partie ou la face interne (i.e. radialement interne) d'un élément est plus proche de l'axe A que la partie ou la face externe (i.e. radialement externe) du même élément.

Le boitier d'alimentation B comprend une paroi de fond, configurée pour faire face à la surface externe du carter C et dans laquelle sont généralement formés un ou plusieurs passages de refroidissement, et une paroi latérale 12 sur laquelle sont montées les rampes de refroidissement R.

Dans une forme de réalisation, chaque tube T est raccordé à la paroi latérale 12 du boitier par l'intermédiaire d'une douille cylindrique D, chaque tube T étant brasé dans la douille D. On notera toutefois que ceci n'est cependant pas limitatif, les tubes T pouvant être raccordés par un tuyau de raccordement qui s'étend au travers du boitier B, comme cela est décrit par exemple dans le document FR 2 977 276 au nom de la Demanderesse, ou par tout autre moyen adapté.

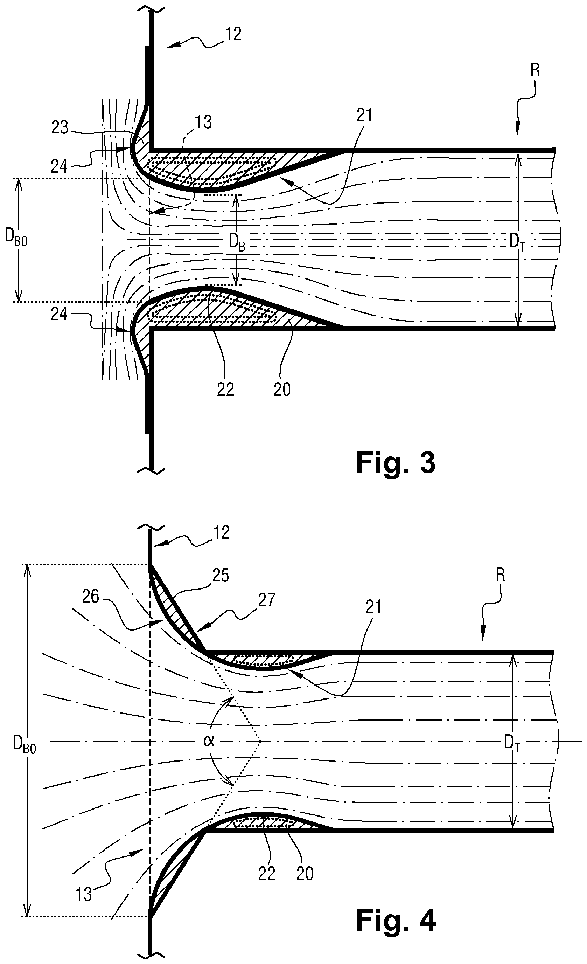

Quelle que soit la configuration du raccordement entre les tubes T de la rampe et le boitier B, l'interface entre le tube T et le boitier B comprend d'une part la paroi latérale 12 du boitier B, dans laquelle est formé un trou 13 permettant de mettre en communication fluidique la rampe avec le canal du boitier B au niveau de la première extrémité de la rampe de refroidissement R. Or, la paroi latérale 12 est plane et la première extrémité de la rampe de refroidissement R s'étend sensiblement perpendiculairement à la paroi latérale 12. Il en découle que les lignes de courant de l'air sous pression au niveau de cette interface ne peuvent pas longer la paroi latérale 12 ni la rampe au niveau de cette interface et que la couche limite se décolle, ce qui crée des pertes de charge. En particulier, au niveau de ce décollement, des zones de recirculation de l'air se forment (voir Fig. 3, lignes en pointillés), réduisant ainsi la pression de l'air à la sortie des orifices O d'éjection.

Afin d'améliorer les performances de la turbomachine 1, l'invention propose de réduire les pertes de charge à l'interface entre le boitier d'alimentation B et les rampes de refroidissement R en supprimant les zones de recirculation ainsi identifiées. Pour cela, l'invention propose de modifier la forme de la face interne du dispositif de refroidissement qui est située à l'interface entre le boitier B et les rampes afin de réduire les discontinuités géométriques au niveau de l'interface entre le boitier d'alimentation B et les rampes de sorte que les lignes de courant épousent davantage la face interne du dispositif de refroidissement.

Pour cela, le dispositif de refroidissement comprend une variation progressive de section 20 dans le tube T qui définit un bossage 20 au niveau de la première extrémité qui présente une surface courbe 21 configurée pour être baignée dans l'air de refroidissement.

De préférence, lorsque la section de la rampe de refroidissement R au niveau de la première entrée est circulaire, le bossage 20 est annulaire et présente une symétrie de révolution autour de l'axe A.

Afin d'éviter le décollement de l'air sous pression dans la rampe, la surface courbe 21 du bossage 20 présente, à partir de l'interface entre la paroi latérale 12 et dans le sens d'écoulement de l'air sous pression dans la rampe de refroidissement R (c'est-à-dire de la première extrémité vers la deuxième extrémité du tube T, vers la droite sur la figure 3), une section convergente puis une section divergente. La forme de la surface du bossage 20 s'approche en pratique de la forme d'une tuyère de Laval.

Ainsi, la section de passage de l'air sous pression dans la rampe de refroidissement R diminue d'abord progressivement pour atteindre un minima puis augmente progressivement jusqu'à atteindre la section du tube T en aval du bossage 20. Au niveau de la section divergente, l'épaisseur du bossage 20 diminue progressivement en direction de la deuxième extrémité du tube T jusqu'à atteindre une épaisseur sensiblement nulle afin de ne pas former de discontinuité géométrique (telle qu'une arête) susceptible de faire décoller la couche limite de l'air sous pression dans la rampe de refroidissement R.

Dans une première variante de réalisation, le bossage 20 peut ne s'étendre que dans la rampe de refroidissement R et ne se prolonge pas dans le canal du boitier B. Dans cette variante, dans le plan de la paroi latérale 12 (au niveau du trou 13 du boitier B sur lequel est raccordée la première extrémité du tube T), l'épaisseur du bossage 20 diminue donc jusqu'à ce que le diamètre interne D_{B} du bossage 20 soit sensiblement égal au diamètre D_{T} du tube T en aval du bossage 20. En d'autres termes, au niveau du trou 13, l'épaisseur du bossage 20 est sensiblement nulle. Dans cette première variante de réalisation, le bossage 20 s'étend donc sensiblement axialement, le long de l'axe A uniquement.

Cette configuration est cependant susceptible de créer des pertes de charge en raison de la présence de l'arête présente à l'interface entre le bossage 20 et la paroi latérale 12 du boitier d'alimentation B.

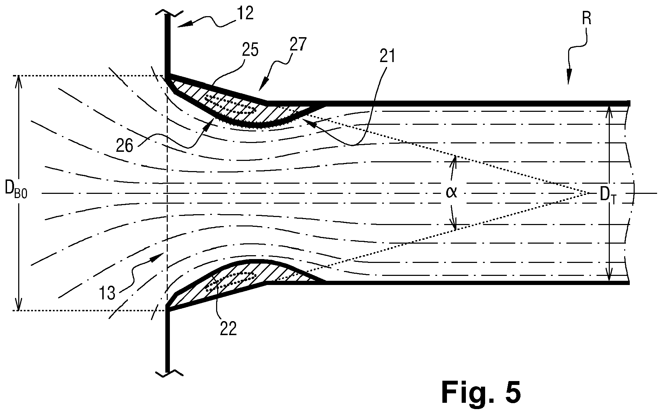

Optionnellement, comme illustré sur les figures 4 et 5, la première extrémité du tube T peut en outre présenter, à l'interface avec la paroi 12, une conduite 25 de section tronconique ayant une paroi tronconique 26 convergente dont la section diminue (converge) progressivement de la paroi 12 vers la deuxième extrémité du tube T (c'est-à-dire dans le sens d'écoulement de l'air sous pression dans la rampe de refroidissement R). La section du tube T devient ensuite globalement constante. Dans cette forme de réalisation, le bossage 20 comprend alors la portion axiale 22, qui s'étend dans la partie de section circulaire du tube T, en aval de la paroi tronconique 26. Le diamètre interne D_{B} du bossage 20 augmente progressivement le long de la conduite tronconique 25 jusqu'au trou 12, où le diamètre interne D_{B0} du bossage 20 dans le plan de la paroi latérale 12 est sensiblement égal au diamètre du trou 13 formé dans la paroi 12.

L'angle α au sommet du cône définissant la conduite tronconique 25 peut être compris entre 60° (Figure 5) et 120° (Figure 4) environ. Plus l'angle α est élevé, plus l'épaisseur du bossage 20 dans la conduite tronconique 25 est faible. Par ailleurs, lorsque le tube T comprend une conduite tronconique 24, la section convergente du bossage 20 est logée au moins en partie dans la conduite tronconique 24, la section divergente s'étendant dans la partie cylindrique de révolution. A titre d'exemple, lorsque l'angle α est de l'ordre de 60° (Figure 5), seule la paroi tronconique 26 comprend la totalité de la section divergente du bossage 20, la portion axiale 22 comprenant la section convergente. Lorsque l'angle α est de l'ordre de 120° (Figure 4), l'épaisseur du bossage 20 est faible et la portion axiale 22 du bossage 20 comprend une partie de la section divergente.

Cette configuration avec conduite tronconique 25 permet ainsi de limiter les pertes de charges en supprimant l'arête présente à l'interface entre le bossage 20 et la paroi latérale 12 du boitier d'alimentation B.

Dans une deuxième variante de réalisation illustrée sur la figure 3, le bossage 20 se prolonge en outre dans la cavité du boitier d'alimentation B de sorte à s'étendre également contre la paroi latérale 12. Cette portion du bossage 20 s'étend donc sensiblement radialement par rapport à l'axe A depuis la portion axiale 22, qui s'étend au sein du tube T.

Dans cette variante de réalisation, la portion axiale 22 du bossage 20 présente une forme similaire à celle de la portion axiale 22 de la première variante de réalisation. En particulier, sa surface courbe 21 présente, à partir de l'interface entre la paroi latérale 12 et dans le sens d'écoulement de l'air sous pression dans le tube T, une section convergente puis une section divergente pour s'approcher de la forme d'une tuyère de Laval.

Par ailleurs, l'épaisseur du bossage 20 peut diminuer jusqu'à ce que le diamètre interne D_{B0} du bossage 20 dans le plan de la paroi latérale 12 soit sensiblement égal au diamètre D_{T} du tube T en aval du bossage 20. Alternativement, comme illustré sur la figure 3, le diamètre interne D_{B0} du bossage 20 dans le plan de la paroi latérale 12 peut être inférieur au diamètre interne D_{T} du tube T en aval du bossage 20 afin de mieux adapter la forme du bossage 20 aux lignes de courant.

La portion radiale 23 du bossage 20 s'étend dans le prolongement de la portion axiale 22 du bossage 20. Ainsi, dans le plan de la paroi latérale 12, le diamètre interne de la portion radiale 23 est égal au diamètre interne D_{B0} de la portion axiale 22. Le diamètre interne de la portion radiale 23 du bossage 20 augmente progressivement depuis la paroi latérale 12, lorsqu'on s'éloigne de la portion axiale 22 (vers la gauche, sur la figure 3) jusqu'à atteindre un maxima correspondant au sommet axial 24 de la portion radiale 23. En d'autres termes, la surface courbe 21 de la portion radiale 23 du bossage 20 diverge jusqu'au sommet axial 24. Puis, afin de ne pas former de discontinuité géométrique, l'épaisseur axiale de la portion radiale 23 du bossage 20 diminue progressivement lorsqu'on s'éloigne radialement de son sommet axial 24 en direction de son bord externe.

Optionnellement, la première extrémité du tube T peut également présenter, à l'interface avec la paroi 12, une conduite 25 de section tronconique convergente dont la section diminue (converge) progressivement de la paroi 12 vers la deuxième extrémité du tube T (c'est-à-dire dans le sens d'écoulement de l'air sous pression dans le tube T. Dans ce cas, le diamètre interne D_{B} du bossage 20 augmente progressivement le long de la conduite tronconique 25 jusqu'au trou 12, où le diamètre interne D_{B0} du bossage 20 dans le plan de la paroi latérale 12 est strictement inférieur au diamètre du trou 13 formé dans la paroi 12. La portion radiale 23 s'étend alors radialement depuis la portion de conduite 26 du bossage 20.

Le bossage 20 peut être rapporté et fixé dans le tube T et le cas échéant contre la paroi latérale 12 (voir par exemple figure 3). Le bossage 20 présente alors la forme d'une douille comprenant une portion axiale 22 dont une face axiale externe est sensiblement cylindrique de révolution et configurée pour venir en contact surfacique avec la surface interne de la première extrémité du tube T. Le cas échéant, lorsque le bossage 20 se prolonge dans le boitier d'alimentation B, la portion radiale 23 comprend une face radiale aval configurée pour venir en contact surfacique avec la surface interne de la paroi latérale 12 du boitier d'alimentation B.

Dans cette forme de réalisation, la première extrémité présente donc une épaisseur variable au niveau du bossage 20.

Le bossage 20 peut être fixé par collage, vissage, brasage, ou tout autre moyen de fixation adapté dans le tube T et/ou contre la paroi latérale 12 du boitier d'alimentation.

Cette forme de réalisation présente l'avantage de pouvoir être appliquée à des dispositif de refroidissement existants, sans nécessiter leur modification structurelle.

En variante (non illustrée sur les figures), le bossage 20 est monolithique avec la première extrémité et le cas échéant la paroi latérale 12. Pour cela, le bossage 20 peut être obtenu par déformation (estampage, usinage, etc.) de la paroi du tube T au niveau de sa première extrémité et le cas échéant de la paroi latérale 12 ou lors de la fabrication du tube T (typiquement par impression 3D). L'épaisseur de la première extrémité du tube T et, le cas échéant, de la paroi latérale 12 au niveau du trou 13, est alors sensiblement constante au niveau du bossage 20. Alternativement, le bossage 20 est obtenu par augmentation locale de l'épaisseur du tube T au niveau de sa première extrémité et, le cas échéant, de la paroi latérale 12 autour du trou 13.

La portion axiale 22 du bossage 20 est donc monolithique avec la paroi latérale 12 du boitier B tandis que sa portion radiale 23 est monolithique avec le tube T. Optionnellement, le tube T et la paroi latérale 12 du boitier d'alimentation B peuvent également être monolithiques.

Cette forme de réalisation implique donc de modifier directement les boîtiers d'alimentation B et les premières extrémités des tubes T.

On notera que, dans l'invention, la géométrie du tube T et, le cas échéant, du boitier d'alimentation B, est localisée et ne modifie donc pas fondamentalement le comportement thermomécanique du dispositif de refroidissement. De plus, aucun aménagement n'est nécessaire pour le raccordement du boitier d'alimentation B et des tubes T. Enfin, la géométrie du tube T permet de réduire le débit prélevé pour le refroidissement et améliore ainsi la performance moteur.

## Revendications

1. Dispositif de refroidissement par jets d'air pour un carter (C) d'une turbomachine (1), notamment un carter (C) de turbine (6, 7), comprenant :
- un boitier (B) d'alimentation en air de refroidissement présentant une paroi (12),
- au moins un tube (T) présentant une première extrémité montée sur la paroi (12) du boitier (B) de sorte à mettre le tube (T) en communication fluidique avec le boitier (B), une pluralité d'orifices (O) étant formés dans une paroi du tube (T) afin d'éjecter l'air de refroidissement provenant du boitier (B) sur le carter (C),
le dispositif de refroidissement étant **caractérisé en ce qu'**il comprend en outre une variation progressive de section (20) dans le tube (T) au niveau de la première extrémité définissant un bossage (20), ledit bossage (20) présentant une surface courbe (21) configurée pour être baignée dans l'air de refroidissement de sorte à éviter un décollement d'une couche limite de l'air de refroidissement au niveau d'une interface entre la première extrémité du tube (T) et le boitier (B).

2. Dispositif de refroidissement selon la revendication 1, dans lequel la surface courbe (21) du bossage (20) est dépourvue d'arête.

3. Dispositif de refroidissement selon l'une des revendications 1 ou 2, dans lequel la variation progressive de section (20) définit, à partir de l'interface entre la première extrémité du tube (T) et la paroi (12) du boitier (B) et dans un sens d'écoulement de l'air de refroidissement dans le tube (T), une section progressivement convergente puis progressivement divergente.

4. Dispositif de refroidissement selon l'une des revendications 1 à 3, dans lequel le bossage (20) présente une épaisseur variable.

5. Dispositif de refroidissement selon l'une des revendications 1 à 4, dans lequel le bossage (20) est rapporté et fixé à la première extrémité du tube (T) ou monolithique avec le tube (T) et le boitier (B).

6. Dispositif de refroidissement selon l'une des revendications 1 à 5, dans lequel le bossage (20) présente une portion de rétrécissement de section de boitier (23) qui s'étend dans le boitier d'alimentation (B).

7. Dispositif de refroidissement selon la revendication 6, dans lequel la portion de rétrécissement de section de boitier (23) présente une section qui diminue progressivement en s'éloignant du tube (T).

8. Dispositif de refroidissement selon l'une des revendications 1 à 7, dans lequel la première extrémité du tube (T) comprend une paroi tronconique (25) de liaison à la paroi (12) du boitier (B), la paroi tronconique (25) ayant une section qui converge progressivement depuis ladite paroi (12) du boitier (B) vers le tube (T), le bossage (20) comprenant en outre une portion de paroi tronconique (26) qui présente une épaisseur variable et qui s'étend le long de la paroi tronconique (25).

9. Turbine (6, 7) d'une turbomachine (1), notamment turbine (7) basse pression, comprenant un dispositif de refroidissement par jets d'air selon l'une des revendications 1 à 8.

10. Turbomachine (1) comprenant une turbine (6, 7), notamment une turbine (7) basse pression, selon la revendication 9.

## Patentansprüche

1. Kühlvorrichtung zur Kühlung eines Gehäuses (C) eines Turbinentriebwerks (1), insbesondere eines Gehäuses (C) einer Turbine (6, 7), mit Luftstrahlen, die Folgendes umfasst:
- einen Kühlluft-Versorgungskasten (B), der eine Wand (12) aufweist,
- mindestens ein Rohr (T), das ein erstes Ende aufweist, das derart an der Wand (12) des Kastens (B) montiert ist, dass das Rohr (T) in Fluidverbindung mit dem Kasten (B) gebracht wird, wobei eine Vielzahl von Öffnungen (O) in einer Wand des Rohrs (T) gebildet sind, um die von dem Kasten (B) kommende Kühlluft auf das Gehäuse (C) auszustoßen,
wobei die Kühlvorrichtung **dadurch gekennzeichnet ist, dass** sie ferner eine allmähliche Querschnittsveränderung (20) in dem Rohr (T) im Bereich des ersten Endes umfasst, die eine Erhebung (20) definiert, wobei die Erhebung (20) eine gekrümmte Oberfläche (21) aufweist, die dazu ausgestaltet ist, derart von Kühlluft umströmt zu werden, dass die Ablösung einer Grenzschicht der Kühlluft im Bereich einer Grenzfläche zwischen dem ersten Ende des Rohrs (T) und dem Kasten (B) verhindert wird.

2. Kühlvorrichtung nach Anspruch 1, wobei die gekrümmte Oberfläche (21) der Erhebung (20) keine Kante aufweist.

3. Kühlvorrichtung nach einem der Ansprüche 1 oder 2, wobei die allmähliche Querschnittsveränderung (20) ausgehend von der Grenzfläche zwischen dem ersten Ende des Rohrs (T) und der Wand (12) des Kastens (B) und in einer Strömungsrichtung der Kühlluft in dem Rohr (T) einen allmählich zusammenlaufenden und dann allmählich auseinanderlaufenden Querschnitt definiert.

4. Kühlvorrichtung nach einem der Ansprüche 1 bis 3, wobei die Erhebung (20) eine veränderliche Dicke aufweist.

5. Kühlvorrichtung nach einem der Ansprüche 1 bis 4, wobei die Erhebung (20) an dem ersten Ende des Rohrs (T) angestückt und befestigt oder monolithisch mit dem Rohr (T) und dem Kasten (B) ist.

6. Kühlvorrichtung nach einem der Ansprüche 1 bis 5, wobei die Erhebung (20) einen Kastenquerschnittsverengungsabschnitt (23) aufweist, der sich in dem Zufuhrkasten (B) erstreckt.

7. Kühlvorrichtung nach Anspruch 6, wobei der Kastenquerschnittsverengungsabschnitt (23) einen Querschnitt aufweist, der mit zunehmender Entfernung von dem Rohr (T) allmählich abnimmt.

8. Kühlvorrichtung nach einem der Ansprüche 1 bis 7, wobei das erste Ende des Rohrs (T) eine kegelstumpfförmige Verbindungswand (25) mit der Wand (12) des Kastens (B) umfasst, wobei die kegelstumpfförmige Wand (25) einen Querschnitt aufweist, der ausgehend von der Wand (12) des Kastens (B) in Richtung des Rohrs (T) allmählich zusammenläuft, wobei die Erhebung (20) ferner einen kegelstumpfförmigen Wandabschnitt (26) umfasst, der eine veränderliche Dicke aufweist und der sich entlang der kegelstumpfförmigen Wand (25) erstreckt.

9. Turbine (6, 7) eines Turbinentriebwerks (1), insbesondere Niederdruckturbine (7), die eine Vorrichtung zur Kühlung mit Luftstrahlen nach einem der Ansprüche 1 bis 8 umfasst.

10. Turbinentriebwerk (1), das eine Turbine (6, 7), insbesondere eine Niederdruckturbine (7), nach Anspruch 9 umfasst.

## Claims

1. Air jet cooling device for a casing (C) of a turbomachine (1), in particular a casing (C) of a turbine (6, 7), comprising : - a cooling air supply casing (B) having a wall (12),
- at least one tube (T) having a first end mounted on the wall (12) of the casing (B) so as to put the tube (T) in fluid communication with the casing (B), a plurality of orifices (O) being formed in a wall of the tube (T) in order to eject the cooling air coming from the casing (B) onto the housing (C),
the cooling
device being **characterised in that** it further comprises a progressive sectional variation (20) in the tube (T) at the first end defining a boss (20), said boss (20) having a curved surface (21) configured to be bathed in the cooling air so as to avoid a separation of a boundary layer of the cooling air at an interface between the first end of the tube (T) and the housing (B).

2. A cooling device according to claim 1, wherein the curved surface (21) of the boss (20) is edge-free.

3. A cooling device according to one of claims 1 or 2, wherein the progressive change in cross-section (20) defines, from the interface between the first end of the tube (T) and the wall (12) of the housing (B) and in a direction of flow of the cooling air in the tube (T), a progressively convergent and then progressively divergent cross-section.

4. A cooling device according to any of claims 1 to 3, wherein the boss (20) has a variable thickness.

5. A cooling device according to any of claims 1 to 4, wherein the boss (20) is attached and fixed to the first end of the tube (T) or monolithic with the tube (T) and the housing (B).

6. The cooling device according to any of claims 1 to 5, wherein the boss (20) has a housing section constriction portion (23) which extends into the supply housing (B).

7. The cooling device according to claim 6, wherein the housing cross-section narrowing portion (23) has a cross-section that progressively decreases away from the tube (T).

8. A cooling device according to any one of claims 1 to 7, wherein the first end of the tube (T) comprises a frusto-conical wall (25) for connection to the wall (12) of the casing (B), the frusto-conical wall (25) having a cross-section which converges progressively from said wall (12) of the casing (B) towards the tube (T), the boss (20) further comprising a frusto-conical wall portion (26) which has a variable thickness and which extends along the frusto-conical wall (25).

9. Turbine (6, 7) of a turbomachine (1), in particular a low-pressure turbine (7), comprising an air jet cooling device according to one of claims 1 to 8.

10. A turbomachine (1) comprising a turbine (6, 7), in particular a low pressure turbine (7), according to claim 9.
